# EUROPEAN PATENT APPLICATION

(11) **EP 4 843 947 A1**
(43) Date of publication of application: **25.11.2026**
(21) Application number: 25742317.8
(22) Date of filing: 16.01.2025
(51) Int. Cl.: C01B 17/28, C01B 17/26, C01B 17/36

(54) **METHOD FOR PREPARING ALKALI METAL SULFIDE**

(30) Priority: 17.01.2024 KR 20240007488
(71) Applicant: Solivis Inc., Hanam-si, Gyeonggi-do 12939 (KR)
(72) Inventor: SHIN, Dong Wook, Guri-si, Gyeonggi-do 11921 (KR); LEE, Young Min, Seoul 01362 (KR); KIM, Sung Jae, Yangju-si, Gyeonggi-do 11523 (KR)
(74) Representative: HGF
(86) International application number: PCT/KR2025/099059
(87) International publication number: WO 2025/155169

(57) **Abstract**

The present disclosure relates to a method for preparing an alkali metal sulfide, comprising the steps of: mixing a precursor and a first reducing agent to form a mixture; reducing the mixture together with a second reducing agent to obtain an alkali metal sulfide; dissolving and purifying the obtained alkali metal sulfide in a polar solvent; and drying the purified alkali metal sulfide.

## Description

### Technical Field

The present disclosure relates to a method of preparing an alkali metal sulfide.

### Background Art

As a method for producing lithium sulfide, for example, a method of reducing lithium sulfate is known. The method of reducing lithium sulfate is a method of producing lithium sulfide by reacting lithium sulfate with a carbon-containing reducing agent to reduce the lithium sulfate.

However, if lithium sulfate is reduced using a carbon-containing reducing agent, an excessive amount of impurities that have reacted with lithium is generated due to the high reactivity of lithium in the production process, resulting in a decrease in the yield and purity of an alkali metal sulfide.

Furthermore, if lithium sulfate is reduced using a carbon-containing reducing agent, the amount of carbon used increases, resulting in the generation of a large amount of compounds that affect the global atmospheric environment, such as CO₂.

### Disclosure of Invention

### Technical Problem

An objective of the present disclosure is to provide a method of preparing an alkali metal sulfide having high purity, even if the amount of carbon used is reduced by using, as reducing agents, hydrogen together with carbon.

### Solution to Problem

According to an aspect of the present disclosure, there is provided a method of preparing an alkali metal sulfide, including: forming a mixture by mixing a precursor with a first reducing agent, the precursor being a compound including an alkali metal element and a sulfur element (S10); reducing the mixture together with a second reducing agent to obtain an alkali metal sulfide (S20); purifying the obtained alkali metal sulfide by dissolution in a polar solvent (S30); and drying the purified alkali metal sulfide (S40).

### Advantageous Effects of Invention

According to embodiments of the present disclosure, even though a reduced amount of carbon is used, the reduction effect is maximized by using hydrogen together with carbon as a reducing agent, and by reducing the amount of carbon used, environmental pollution caused by carbon dioxide or the like can be prevented, and high-purity alkali metal sulfides can be prepared.

Moreover, by using carbon and hydrogen as reducing agents, alkali metal sulfides can be prepared at a relatively low temperature.

### Brief Description of Drawings

FIG. 1 is a flowchart illustrating a method of preparing an alkali metal sulfide, according to an embodiment of the present disclosure.
FIG. 2 is a graph showing the results of XRD analysis of alkali metal sulfides of Comparative Examples 1 to 3.
FIG. 3 is a graph showing the results of XRD analysis of alkali metal sulfides of Examples 1 and 2.
FIG. 4 is a graph showing the results of XRD analysis of alkali metal sulfides of Examples 3 and 4.
FIG. 5 is a graph showing the results of XRD analysis of alkali metal sulfides of Examples 3 and 5.
FIG. 6 is a graph showing the results of XRD analysis of alkali metal sulfides of Examples 3 and 6.
FIG. 7 is a graph showing the results of XRD analysis of alkali metal sulfides of Examples 7 and 8.
FIG. 8 is a graph showing the results of XRD analysis of alkali metal sulfides of Examples 3 and 8.
FIG. 9 is a graph showing the results of XRD analysis of alkali metal sulfides of Examples 8 and 9.

### Best Mode for Carrying out the Invention

According to an aspect of the present disclosure, there is provided a method of preparing an alkali metal sulfide, including: forming a mixture by mixing a precursor with a first reducing agent, the precursor being a compound including an alkali metal element and a sulfur element (S10); reducing the mixture together with a second reducing agent to obtain an alkali metal sulfide (S20); purifying the obtained alkali metal sulfide by dissolution in a polar solvent (S30); and drying the purified alkali metal sulfide (S40).

In an embodiment of the present disclosure, the method of preparing an alkali metal sulfide may further include drying after the formation of the mixture (S10).

According to an embodiment of the present disclosure, in the method of preparing an alkali metal sulfide, the precursor may be one of lithium sulfate, sodium sulfate, and potassium sulfate.

According to an embodiment of the present disclosure, in the method of preparing the alkali metal sulfide, the first reducing agent may be a carbon-based reducing agent.

According to an embodiment of the present disclosure, in the method of preparing an alkali metal sulfide, the first reducing agent may include at least one solid carbonaceous material selected from coal, coke, graphite, carbon black, fullerene, carbon nanotubes, charcoal, carbide, elemental carbon, and allotropes thereof.

According to an embodiment of the present disclosure, in the method of preparing an alkali metal sulfide, a reduction temperature in the reduction of the mixture together with a second reducing agent to obtain an alkali metal sulfide (S20) may be 700 °C to 800 °C.

According to an embodiment of the present disclosure, in the method of preparing an alkali metal sulfide, a molar ratio (precursor:first reducing agent) of the precursor to the first reducing agent may be 1:1.5 to 1:2.

According to an embodiment of the present disclosure, in the method of preparing an alkali metal sulfide, a hydrogen concentration may be 2 vol% to 4 vol%, and a flow rate of the second reducing agent may be 50 cc/min to 100 cc/min.

According to an embodiment of the present disclosure, in the method of preparing an alkali metal sulfide, the second reducing agent may include hydrogen and at least one selected from the group consisting of carbon monoxide, nitrogen, argon, helium, neon, methane, ethane, propane, and butane.

In an embodiment of the present disclosure, the method of preparing an alkali metal sulfide may further include, after the drying of the purified alkali metal sulfide (S40), crystallizing the dried alkali metal sulfide.

According to an embodiment of the present disclosure, in the method of preparing an alkali metal sulfide, peaks appear at diffraction angles (2θ) of 27° ± 1.0°, 31° ± 1.0°, 45° ± 1.0°, and 53° ± 1.0° in a graph of X-ray diffraction (XRD) analysis of the alkali metal sulfide, and Equation 1 is satisfied.${I}_{background} \leq {I}_{min}$ Equation 1
wherein Iₘᵢₙ is a height of the lowest peak among Li₂S peaks corresponding to positions at diffraction angles (2θ) of 27° ± 1.0°, 31° ± 1.0°, 45° ± 1.0°, and 53° ± 1.0° in the graph of XRD analysis, and I_{background} is a height of the highest peak in a diffraction angle (2θ) range of 20° to 25° in the graph of XRD analysis.

### Mode for the Invention

As the present disclosure allows for various changes and numerous embodiments, particular embodiments will be illustrated in the drawings and described in detail in the detailed description. Effects and features of the present disclosure and methods of achieving the same will become apparent with reference to the embodiments described in detail below with reference to the drawings. However, the present disclosure is not limited to the embodiments described below, and may be implemented in various forms.

In the following embodiments, the terms "first" and "second" are not used in a limited sense and are used only to distinguish one component from another component.

In the following embodiments, an expression used in the singular encompasses the expression in the plural, unless it has a clearly different meaning in the context.

In the following embodiments, it will be further understood that the terms "comprise" and/or "have" used herein specify the presence of stated features or components, but do not preclude the presence or addition of one or more other features or components.

It will be understood that, when a film, region, or element is referred to as being "on" another film, region, or element, it can be directly on the other film, region, or element, and intervening films, regions, or elements may be present therebetween.

In the drawings, for convenience of description, sizes of components may be exaggerated or reduced. For example, because sizes and thicknesses of components in the drawings are arbitrarily illustrated for convenience of explanation, the present disclosure is not necessarily limited thereto.

Hereinafter, embodiments of the present disclosure will be described in detail with reference to the accompanying drawings, and in the following description with reference to the drawings, like reference numerals refer to like or corresponding components.

### Method of preparing alkali metal sulfide

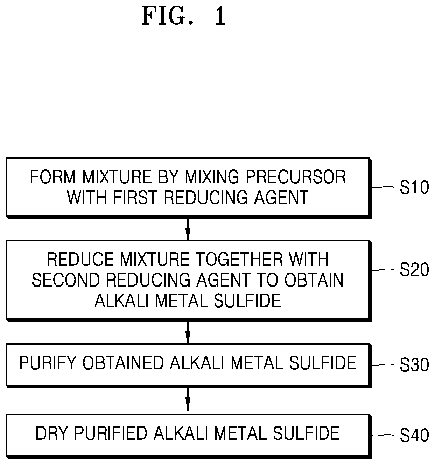

FIG. 1 is a flowchart illustrating a method of preparing an alkali metal sulfide, according to an embodiment of the present disclosure.

Referring to FIG. 1, the method of preparing an alkali metal sulfide (S1) may include: forming a mixture by mixing a precursor with a first reducing agent (S10); reducing the mixture together with a second reducing agent to obtain an alkali metal sulfide (S20); purifying the obtained alkali metal sulfide by dissolution in a polar solvent (S30); and drying the purified alkali metal sulfide (S40).

In the formation of the mixture by mixing a precursor with a first reducing agent (S10), the precursor may be a compound including an alkali metal element and a sulfur element. For example, the alkali metal element may be a lithium element (Li), a sodium element (Na), or a potassium element (K), or the like, and the precursor may be lithium sulfate, sodium sulfate, potassium sulfate, or the like. The precursor may be a hydrate or an anhydrous compound.

The first reducing agent may include carbon. The first reducing agent is a carbon-based reducing agent, a material of which is not particularly limited, and the first reducing agent may be in a gaseous, liquid, or solid phase. In other embodiments, the first reducing agent may include a non-carbon atom, as long as the first reducing agent can serve as a carbon source. For example, the first reducing agent may include at least one solid carbonaceous material selected from coal, coke, graphite, carbon black, fullerene, carbon nanotubes, charcoal, carbide, elemental carbon, and allotropes thereof.

A solvent may be used to mix the precursor with the first reducing agent, and as an example, an organic solvent may be used, which may be, for example, selected from the group consisting of ethanol, cyclohexane, hexane, n-heptane, and combinations thereof.

The precursor and the first reducing agent, mixed with the organic solvent, may be uniformly mixed by milling, stirring, a homogenizer, ultrasonication, or the like. As an example, the mixing of the precursor with the first reducing agent may be performed by a milling process. The milling process may be selected from the group consisting of ball milling, attrition milling, vibration milling, disk milling, jet milling, rotor milling, pearl milling, and a combination thereof.

In some embodiments, the precursor and the first reducing agent may be mixed in a certain ratio. For example, the precursor and the first reducing agent may be mixed in a molar ratio of 1:1.5 to 1:2, and specifically, in a molar ratio of 1:1.5. In case that the content of the first reducing agent is too low, reduction efficiency may deteriorate. On the other hand, in case that the content of the first reducing agent is excessively high, an excessive amount of impurities may be generated, which may reduce production efficiency. Therefore, it is important that the precursor and the first reducing agent are mixed in a certain molar ratio.

In an optional embodiment, the method may further include, after the formation of the mixture (S10), drying to remove the solvent. As an example, the drying may include various methods such as vacuum drying, hot air drying, freeze drying, and spray drying. A drying temperature for removing the solvent may be 40 to 60 °C, and in this case, the drying atmosphere may be a vacuum atmosphere at a pressure of 40 mbar or less.

In the reduction of the mixture together with the second reducing agent to obtain an alkali metal sulfide (S20), the mixture may be reduced by heat treatment together with the second reducing agent.

The second reducing agent may be a reducing gas, and the reducing gas may include hydrogen. As an example, the reducing gas may be a mixture of hydrogen and at least one selected from the group consisting of carbon monoxide, nitrogen, argon, helium, neon, methane, ethane, propane, and butane. As such, by supplying a reducing gas containing hydrogen to the mixture including the first reducing agent, the reduction effect may be further enhanced, resulting in a significant reduction in the amount of the first reducing agent including carbon, which affects the atmospheric environment, compared to the related art. As a result, the amount of carbon compounds generated during the reaction process may be reduced, thereby mitigating the problem of atmospheric environmental pollution caused by carbon compounds.

Upon heat treatment of the mixture together with the second reducing agent, a reduction temperature may be 700 °C to 800 °C. Specifically, the lower limit of the reduction temperature may be 700 °C, 710 °C, 720 °C, 730 °C, 740 °C, or 750 °C, and the upper limit of the reduction temperature may be 800 °C, 790 °C, 780 °C, 770 °C, or 760 °C. In case that the range of the reduction temperature is satisfied, lithium sulfide having a low impurity content and high crystallinity may be obtained.

In case that the concentration of hydrogen is 2 vol% to 4 vol%, the flow rate of the second reducing agent may be 50 cc/min to 100 cc/min. Specifically, the lower limit of the flow rate of the second reducing agent may be, for example, 50 cc/min, 55 cc/min, 60 cc/min, 65 cc/min, or 70 cc/min, and the upper limit of the flow rate of the second reducing agent may be, for example, 100 cc/min, 95 cc/min, 90 cc/min, 85 cc/min, or 80 cc/min. In case that the flow rate range of the second reducing agent is satisfied, high-purity lithium sulfide (Li₂S) may be obtained with almost no impurities generated even if the content of the first reducing agent is reduced.

In some embodiments, the mixture may be loaded into a tube having an outer diameter of 30 mm to 70 mm and a length of 400 mm to 800 mm, a reducing gas containing hydrogen at a hydrogen concentration of 2 vol% to 4 vol% may be supplied at a rate of 50 cc/min to 100 cc/min to the tube into which the mixture is loaded, and at the same time, heat treatment may be performed at 700 to 900 °C for 1 to 24 hours. As such, by supplying the reducing gas at a rate of 50 cc/min to 100 cc/min to the tube having an outer diameter of 30 mm to 70 mm and a length of 400 mm to 800 mm, contact between the reducing gas and composite powder generated by the precursor and the first reducing agent may be promoted, so that the reduction reaction can efficiently proceed.

In the purification of the obtained alkali metal sulfide by dissolution in a polar solvent (S30), the obtained alkali metal sulfide may be dissolved in a solvent, and the unreacted precursor and impurities may not be dissolved in the solvent but may settle. The impurities that are not dissolved and have settled may be removed, and only the purified high-purity alkali metal sulfide may be extracted.

In this case, the solvent used upon purification may be a polar solvent. As an example, the polar solvent may have a polarity index of 4.3 to 6.2. The polar solvent may be, for example, ethanol or 1-propanol. In such a solvent, the obtained alkali metal sulfide may be selectively dissolved, and the remaining impurities settle, thereby enabling easy separation of the alkali metal sulfide from the impurities, and thus a high-purity alkali metal sulfide may be obtained.

In an optional embodiment, the purification may include centrifugation. The centrifugation may be performed at about 1000 to about 5000 rpm for about 5 minutes to about 60 minutes, for example, at 1000 to 4000, 1000 to 3000, 2000 to 5000, 2000 to 4000, 2000 to 3000, 3000 to 5000, or 3000 to 4000 rpm for 5 to 50, 5 to 40, 5 to 30, 10 to 60, 10 to 50, 10 to 40, 10 to 30, 20 to 60, 20 to 50, 20 to 40, 30 to 60, or 30 to 50 minutes.

In an optional embodiment, the obtained alkali metal sulfide and impurities may be purified by various methods such as filtering, compression dewatering, and filter pressing.

In the drying of the purified alkali metal sulfide (S40), a remaining solvent may be removed from the purified alkali metal sulfide by vacuum drying, hot air drying, freeze drying, spray drying, or the like.

In an optional embodiment, the method may further include crystallizing the dried alkali metal sulfide.

In the crystallization, the alkali metal sulfide from which the solvent has been removed may be crystallized by heat treatment. In this case, the heat treatment temperature may be 300 °C to 930 °C. In the heat treatment for crystallization, by supplying at least one reducing gas selected from the group consisting of carbon monoxide, nitrogen, hydrogen, argon, helium, neon, methane, ethane, propane, and butane, the purity of the alkali metal sulfide may be further enhanced.

### Alkali metal sulfide

According to the method of preparing an alkali metal sulfide, a high-purity alkali metal sulfide containing almost no impurities may be obtained. The alkali metal sulfide may be, for example, lithium sulfide, sodium sulfide, potassium sulfide, or the like, and the impurities may be lithium carbonate (Li₂CO₃), lithium sulfate (Li₂SO₄), lithium hydroxide (LiOH), or lithium oxide (Li₂O).

The high-purity alkali metal sulfide may have a purity of 95 % or more. Specifically, the purity of the alkali metal sulfide may be 95 % or more, 95.5 % or more, 96 % or more, 96.5 % or more, 97 % or more, 97.5 % or more, 98 % or more, 98.5 % or more, 99 % or more, or 99.5 % or more.

In the graph of X-ray diffraction (XRD) analysis of an alkali metal sulfide prepared by the method of preparing an alkali metal sulfide according to the present disclosure, peaks may appear at diffraction angles (2θ) of 27° ± 1.0°, 31° ± 1.0°, 45° ± 1.0°, and 53° ± 1.0°, and Equation 1 may be satisfied.${I}_{background} \leq {I}_{min}$ Equation 1
wherein Iₘᵢₙ is a height of the lowest peak among Li₂S peaks corresponding to positions at diffraction angles (2θ) of 27° ± 1.0°, 31° ± 1.0°, 45° ± 1.0°, and 53° ± 1.0° in the graph of XRD analysis, and I_{background} is a height of the highest peak in a diffraction angle (2θ) range of 20° to 25° in the graph of XRD analysis.

In the results of XRD analysis of an alkali metal sulfide obtained by supplying lithium sulfate and carbon in a molar ratio of 1:2 and a reducing gas (hydrogen concentration of 3 vol%) at 50 cc/min and an alkali metal sulfide obtained by supplying lithium sulfate and carbon in a molar ratio of 1:1.5 and a reducing gas (hydrogen concentration of 3 vol%) at 100 cc/min, it can be confirmed that peaks of impurities are scarcely observed and peaks of lithium sulfide are similarly observed. Therefore, in case that the reduction reaction is performed using carbon and hydrogen simultaneously as reducing agents at an appropriate ratio, hydrogen may partially substitute for carbon, thereby reducing the amount of carbon used. Moreover, even though the amount of carbon as the first reducing agent is reduced, the amount of hydrogen as the second reducing agent may be increased, thereby reducing the generation of impurities. As a result, atmospheric environmental pollution caused by carbon compounds generated during the preparation process may be reduced, and high-purity alkali metal sulfides may be prepared.

Hereinafter, examples will be provided to aid in understanding the present disclosure. However, the following examples are provided for illustrative purposes only and should not be construed as limiting the scope of the present application to the examples described in detail below. It is apparent to those of ordinary skill in the art that various changes and modifications can be made within the scope and technical spirit of the present disclosure, and it is obvious that such changes and modifications fall within the scope of the appended claims.

### Example 1

Anhydrous lithium sulfate (Li₂SO₄ anhydrous) was used as a precursor, and Super P, which is a type of carbon-based material, was used as a first reducing agent, and the precursor and the first reducing agent were mixed in a molar ratio of 1:2. In this case, the mixing process was performed by ball milling for 24 hours using 3 mm balls in air using ethanol as a solvent.

Thereafter, through a drying process, the ball-milled mixture was dried in a vacuum at 60 °C, and the balls were removed to obtain a composite powder.

The obtained composite powder was heat-treated at 800 °C for 12 hours while an Ar-H₂ mixed gas containing 3 vol% hydrogen was supplied at 50 cc/min, to thereby prepare an alkali metal sulfide (composite particles in which black particles and white particles were mixed).

An XRD measurement was performed on the alkali metal sulfide (composite particles in which black particles and white particles were mixed) prepared after the reduction process.

### Example 2

An alkali metal sulfide (composite particles in which black particles and white particles were mixed) was prepared in the same manner as in Example 1, except that a N₂-H₂ mixed gas was used instead of the Ar-H₂ mixed gas in the reduction process.

An XRD measurement was performed on the alkali metal sulfide (composite particles in which black particles and white particles were mixed) prepared after the reduction process.

### Example 3

An alkali metal sulfide (composite particles in which black particles and white particles were mixed) was prepared in the same manner as in Example 1, except that ethanol as a solvent was not used in the mixing process, and consequently, a drying process was not performed, and an N₂-H₂ mixed gas was used instead of the Ar-H₂ mixed gas in the reduction process.

An XRD measurement was performed on the alkali metal sulfide (composite particles in which black particles and white particles were mixed) prepared after the reduction process.

### Example 4

An alkali metal sulfide (composite particles in which black particles and white particles were mixed) was prepared in the same manner as in Example 1, except that, after weighing in an Ar atmosphere glove box, the mixing process was performed in the glove box, and an N₂-H₂ mixed gas was used instead of the Ar-H₂ mixed gas in the reduction process.

An XRD measurement was performed on the alkali metal sulfide (composite particles in which black particles and white particles were mixed) prepared after the reduction process.

### Example 5

A purification process was performed to obtain a white powder by dissolving the alkali metal sulfide (composite particles in which black particles and white particles were mixed) obtained in Example 3 in ethanol and drying the resulting solution. Subsequently, as a recrystallization process, heat treatment was performed at 600 °C for 12 hours under an Ar atmosphere to thereby finally obtain a crystallized alkali metal sulfide (white powder).

An XRD measurement was performed on the finally obtained crystallized alkali metal sulfide (white powder) to evaluate a degree of reduction, crystallinity, and impurities.

### Example 6

An alkali metal sulfide (composite particles in which black particles and white particles were mixed) was prepared in the same manner as in Example 1, except that, to reduce the composite powder obtained in the drying process, an N₂-H₂ mixed gas was supplied at 50 cc/min and 750 °C for 12 hours.

An XRD measurement was performed on the alkali metal sulfide (composite particles in which black particles and white particles were mixed) prepared after the reduction process.

### Example 7

An alkali metal sulfide (composite particles in which black particles and white particles were mixed) was prepared in the same manner as in Example 1, except that anhydrous lithium sulfate (Li₂SO₄ anhydrous) and Super P as a first reducing agent were mixed in a molar ratio of 1:1.5, and an N₂-H₂ mixed gas was used instead of the Ar-H₂ mixed gas in the reduction process.

An XRD measurement was performed on the alkali metal sulfide (composite particles in which black particles and white particles were mixed) prepared after the reduction process.

### Example 8

An alkali metal sulfide (composite particles in which black particles and white particles were mixed) was prepared in the same manner as in Example 1, except that anhydrous lithium sulfate (Li₂SO₄ anhydrous) and Super P as a first reducing agent were mixed in a molar ratio of 1:1.5, and an N₂-H₂ mixed gas was supplied at 100 cc/min, which is twice the flow rate, instead of the Ar-H₂ mixed gas in the reduction process.

An XRD measurement was performed on the alkali metal sulfide (composite particles in which black particles and white particles were mixed) prepared after the reduction process.

### Example 9

An alkali metal sulfide (composite particles in which black particles and white particles were mixed) was prepared in the same manner as in Example 1, except that an N₂-H₂ mixed gas was supplied at 100 cc/min instead of the Ar-H₂ mixed gas in the reduction process.

An XRD measurement was performed on the alkali metal sulfide (composite particles in which black particles and white particles were mixed) prepared after the reduction process.

### Comparative Example 1

Lithium sulfate monohydrate (Li₂SO₄ monohydrate) was used as a precursor, and Super P, which is a type of carbon-based material, was used as a first reducing agent, and the precursor and the first reducing agent were mixed in a molar ratio of 1:4. In this case, the mixing process was performed by ball milling for 24 hours using 3 mm balls in the atmosphere with ethanol.

Thereafter, through a drying process, the ball-milled mixture was dried in a vacuum at 60 °C, and the balls were removed to obtain a composite powder.

To reduce the obtained composite powder, Ar, which is a type of inert gas, was supplied at 50 cc/min and 800 °C for 12 hours to thereby obtain an alkali metal sulfide (composite particles in which black particles and white particles were mixed).

To obtain a white powder, a purification process was performed by dissolving the alkali metal sulfide (composite particles in which black particles and white particles were mixed) in ethanol and drying the resulting solution.

Subsequently, as a recrystallization process, heat treatment was performed at 600 °C for 12 hours under an Ar atmosphere to thereby finally obtain a crystallized alkali metal sulfide (white powder).

An XRD measurement was performed on the finally obtained crystallized alkali metal sulfide (white powder) to evaluate a degree of reduction, crystallinity, and impurities.

### Comparative Example 2

A crystallized alkali metal sulfide (white powder) was finally obtained in the same manner as in Comparative Example 1, except that Super P, which is a type of carbon-based material, as a first reducing agent was not added, thereby omitting the mixing process and the drying process, and an Ar-H₂ mixed gas containing Ar and 3% of hydrogen was used instead of the Ar gas in the reduction process.

An XRD measurement was performed on the finally obtained crystallized alkali metal sulfide (white powder) to evaluate a degree of reduction, crystallinity, and impurities.

### Comparative Example 3

A crystallized alkali metal sulfide (white powder) was finally obtained in the same manner as in Comparative Example 1, except that an Ar-H₂ mixed gas containing Ar, which is a type of inert gas, and 3% of hydrogen was used instead of the Ar gas in the reduction process.

An XRD measurement was performed on the finally obtained crystallized alkali metal sulfide (white powder) to evaluate a degree of reduction, crystallinity, and impurities.

### Evaluation Example: X-ray diffraction (XRD) analysis

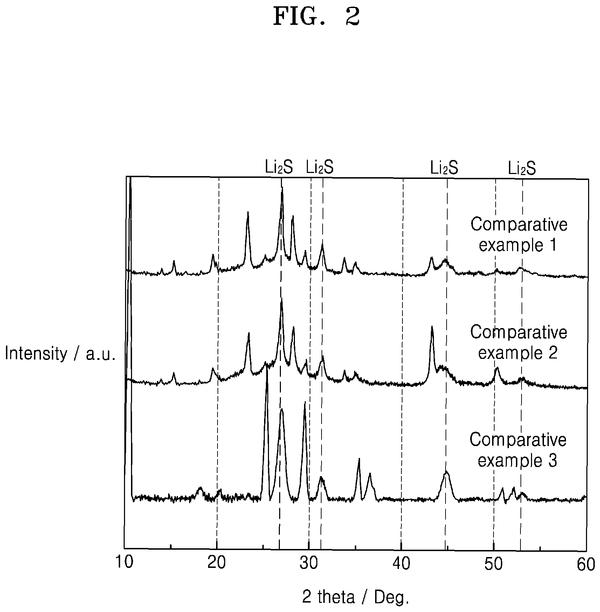

XRD analysis was performed on the alkali metal sulfides obtained in Comparative Examples 1 to 3 and Examples 1 to 9 using Aeris manufactured by Malvern, wherein Cu Kα radiation was used for the XRD analysis. Graphs obtained by analyzing the metal sulfides of Comparative Examples 1 to 3 and Examples 1 to 9 by XRD are shown in FIGS. 2 to 9.

**Table 1**

| | Mixing process | | | Drying process |
|---|---|---|---|---|
| | Precursor | First reducing agent | Molar ratio | |
| Example 1 | Anhydrous | Super P | 1:2 | O |
| Example 2 | Anhydrous | | 1:2 | O |
| Example 3 | Anhydrous | | 1:2 | - |
| Example 4 | Anhydrous | | 1:2 | O |
| Example 5 | Anhydrous | | 1:2 | - |
| Example 6 | Anhydrous | | 1:2 | O |
| Example 7 | Anhydrous | | 1:1.5 | O |
| Example 8 | Anhydrous | | 1:1.5 | O |
| Example 9 | Anhydrous | | 1:2 | O |
| Comparative Example 1 | Monohydrate | Super P | 1:4 | O |
| Comparative Example 2 | Monohydrate | - | - | - |
| Comparative Example 3 | Monohydrate | Super P | 1:4 | O |

**Table 2**

| | Reduction process | | | Purification process Drying process Recrystallization process |
|---|---|---|---|---|
| | Type of second reducing agent | Flow rate of second reducing agent | Reduction temperature | |
| Example 1 | Ar-H₂ | 50 cc/min | 800 °C | - |
| Example 2 | N₂-H₂ | 50 cc/min | 800 °C | - |
| Example 3 | N₂-H₂ | 50 cc/min | 800 °C | - |
| Example 4 | N₂-H₂ | 50 cc/min | 800 °C | - |
| Example 5 | N₂-H₂ | 50 cc/min | 800 °C | O |
| Example 6 | N₂-H₂ | 50 cc/min | 750 °C | - |
| Example 7 | N₂-H₂ | 50 cc/min | 800 °C | - |
| Example 8 | N₂-H₂ | 100 cc/min | 800 °C | - |
| Example 9 | N₂-H₂ | 100 cc/min | 800 °C | - |
| Comparative Example 1 | Ar | 50 cc/min | 800 °C | O |
| Comparative Example 2 | Ar-H₂ | 50 cc/min | 800 °C | O |
| Comparative Example 3 | Ar-H₂ | 50 cc/min | 800 °C | O |

Referring to FIG. 2, in the XRD analysis graph, it can be seen that Iₘᵢₙ, which is the height of the lowest peak among Li₂S peaks corresponding to positions of diffraction angles (2θ) of 27° ± 1.0°, 31° ± 1.0°, 45° ± 1.0°, and 53° ± 1.0°, is lower than I_{background}, which is the height of the highest peak in a diffraction angle (2θ) range of 20° to 25°. That is, it can be confirmed that lithium sulfide (Li₂S) was partially reduced but a large amount of impurities was generated in both Comparative Example 1, which used only a large amount of the first reducing agent, and Comparative Example 2, which used only the second reducing agent. In Comparative Example 3, which combined Comparative Examples 1 and 2, it can be confirmed that the simultaneous use of the first and second reducing agents in excess amounts resulted in an excessive amount of carbon, which conversely increased impurities.

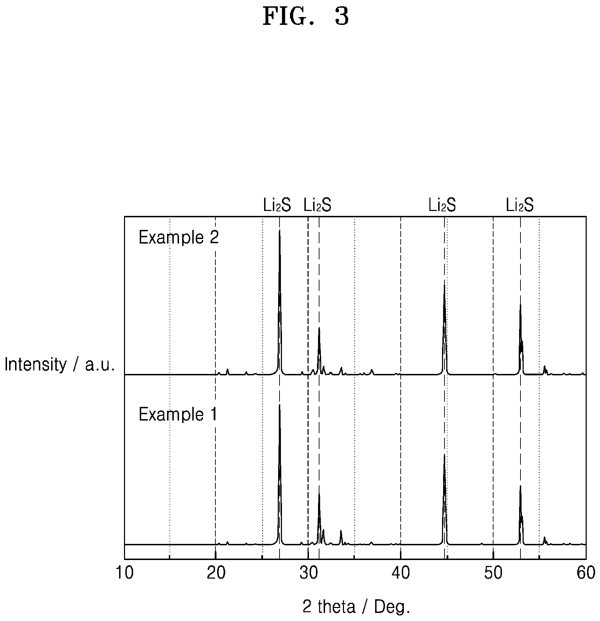

However, referring to FIG. 3, in Example 1 using the first and second reducing agents in an appropriate ratio, lithium carbonate, which is an impurity, was hardly generated, making it possible to obtain high-purity lithium sulfide (Li₂S).

In case that lithium sulfide (Li₂S) is reduced to lithium (Li), the lithium may react with N₂ gas to form lithium nitride (Li₃N). However, referring to Example 1 using the Ar-H₂ mixed gas and Example 2 using the N₂-H₂ mixed gas, it can be confirmed that lithium nitride (Li₃N) is substantially not generated in Example 2. Therefore, it can be seen that high-purity lithium sulfide (Li₂S) can be obtained by using a relatively inexpensive N₂-based N₂-H₂ mixed gas instead of the Ar-H₂ mixed gas.

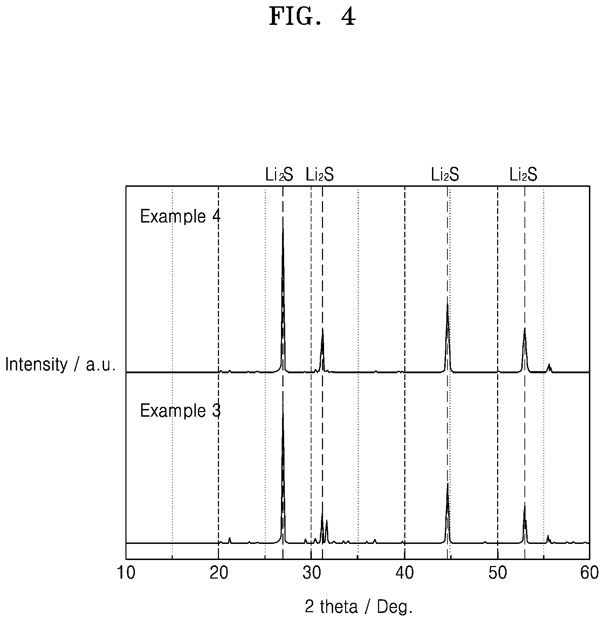

Referring to FIG. 4, from the result of Example 3 where almost no impurities were generated even without using ethanol as a solvent in the mixing process, it can also be confirmed that the method of preparing an alkali metal sulfide according to the present disclosure is applicable to both dry and wet mixing processes.

It can also be confirmed that, compared to Example 3, in which mixing was performed in air without a drying process, Example 4, in which the mixing process was performed in a glove box under a moisture-controlled environment, showed further reduced impurities, enabling the preparation of lithium sulfide (Li₂S) of higher purity.

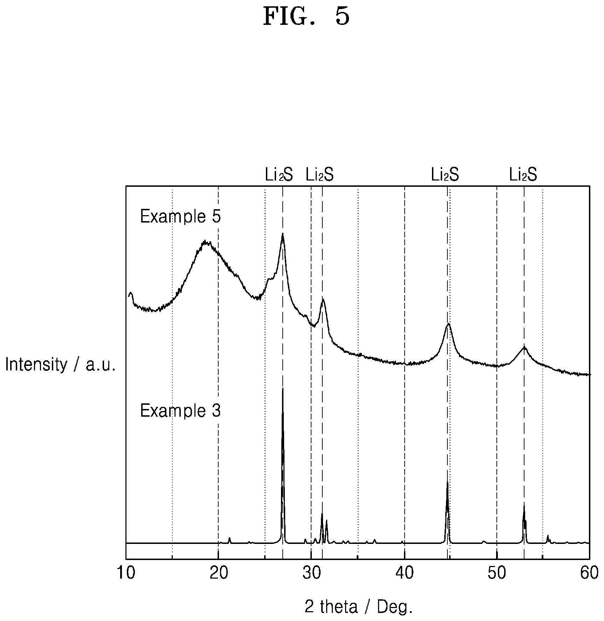

Referring to FIG. 5, it can be confirmed that, in Example 5 where the reduced alkali metal sulfide (composite particles in which black particles and white particles were mixed) of Example 3 was subjected to purification and recrystallization processes, carbon is removed by dissolving the sulfide in ethanol, which is a polar solvent, followed by precipitation, thereby effectively purifying lithium sulfide (Li₂S).

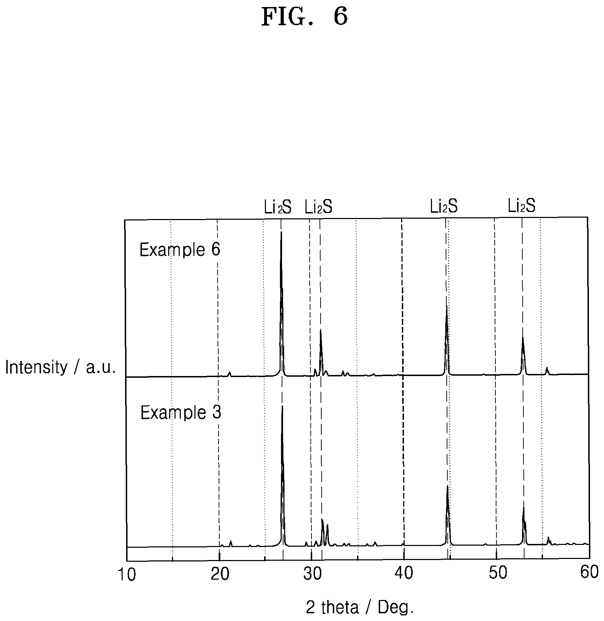

Referring to FIG. 6, it can be confirmed that, in Example 6 wherein heat treatment was performed at 750 °C in the reduction process, the use of the first and second reducing agents in an appropriate ratio maintains the reduction effect even though the reduction temperature is lowered to 750 °C, which is lower than 800 °C, making it possible to obtain high-purity lithium sulfide (Li₂S).

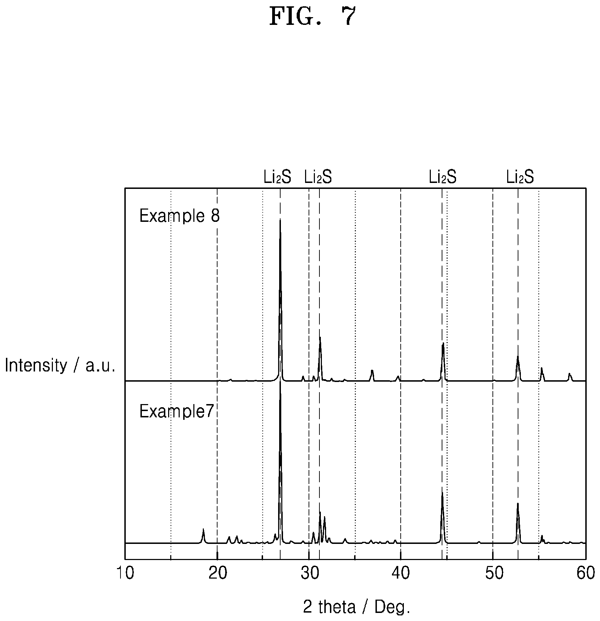

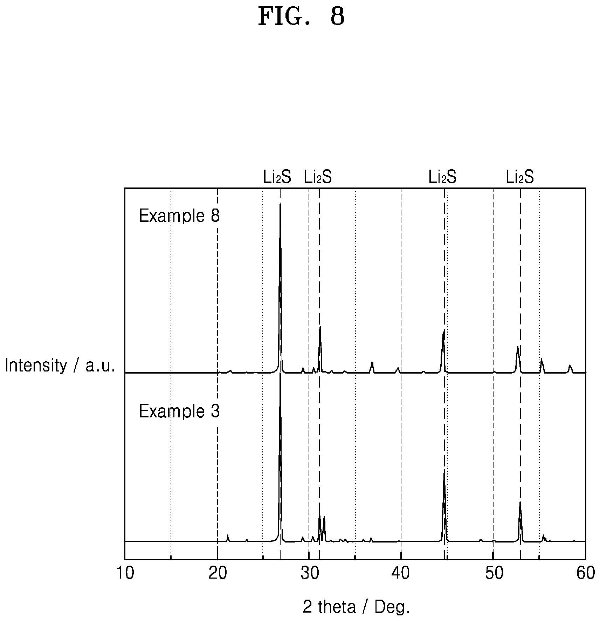

Particularly, referring to FIGS. 7 and 8, it can be confirmed that some new impurities were generated in Example 7 where the molar ratio of the precursor to the first reducing agent was 1:1.5, whereas purity similar to that in the case where the molar ratio of the precursor to the first reducing agent was 1:2 could be obtained in Example 8 where the flow rate of the second reducing agent was doubled (100 cc/min) compared to the flow rate (50 cc/min) in Example 7. Through these results, it can be confirmed that the effect of a decrease in the first reducing agent can be overcome by increasing the second reducing agent.

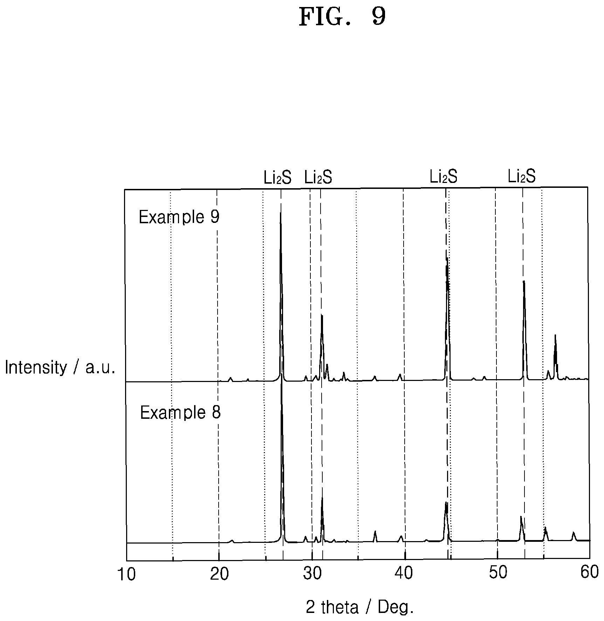

Lastly, referring to FIG. 9, it can be seen that, in Example 9 where the molar ratio of the precursor to the first reducing agent was 1:2 and the flow rate of the second reducing agent was increased (100 cc/min), a larger amount of carbon as the first reducing agent is suitable for synthesizing lithium sulfide (Li₂S) with high crystallinity under conditions of an increased amount of hydrogen. In contrast, it can be confirmed that, as the amount of carbon exceeds that in Example 8, the amount of impurities slightly increases.

## Claims

1. A method of preparing an alkali metal sulfide, the method comprising:
forming a mixture by mixing a precursor with a first reducing agent, the precursor being a compound comprising an alkali metal element and a sulfur element (S10);
reducing the mixture together with a second reducing agent to obtain an alkali metal sulfide (S20);
purifying the obtained alkali metal sulfide by dissolution in a polar solvent (S30); and
drying the purified alkali metal sulfide (S40).

2. The method of preparing an alkali metal sulfide of claim 1, further comprising drying after the formation of the mixture (S10).

3. The method of preparing an alkali metal sulfide of claim 1, wherein the precursor is one of lithium sulfate, sodium sulfate, and potassium sulfate.

4. The method of preparing an alkali metal sulfide of claim 1, wherein the first reducing agent is a carbon-based reducing agent.

5. The method of preparing an alkali metal sulfide of claim 1, wherein the first reducing agent comprises at least one solid carbonaceous material selected from the group consisting of coal, coke, graphite, carbon black, fullerene, carbon nanotubes, charcoal, carbide, elemental carbon, and allotropes thereof.

6. The method of preparing an alkali metal sulfide of claim 1, wherein, in the reduction of the mixture together with a second reducing agent to obtain an alkali metal sulfide (S20), a reduction temperature is 700 °C to 800 °C.

7. The method of preparing an alkali metal sulfide of claim 1, wherein a molar ratio (precursor:first reducing agent) of the precursor to the first reducing agent is 1:1.5 to 1:2.

8. The method of preparing an alkali metal sulfide of claim 1, wherein a hydrogen concentration is 2 vol% to 4 vol%, and a flow rate of the second reducing agent is 50 cc/min to 100 cc/min.

9. The method of preparing an alkali metal sulfide of claim 1, wherein the second reducing agent comprises hydrogen and at least one selected from the group consisting of carbon monoxide, nitrogen, argon, helium, neon, methane, ethane, propane, and butane.

10. The method of preparing an alkali metal sulfide of claim 1, further comprising, after the drying of the purified alkali metal sulfide (S40), crystallizing the dried alkali metal sulfide.

11. The method of preparing an alkali metal sulfide of claim 1, wherein,
in a graph of X-ray diffraction (XRD) analysis of the alkali metal sulfide, peaks appear at diffraction angles (2θ) of 27° ± 1.0°, 31° ± 1.0°, 45° ± 1.0°, and 53° ± 1.0°, and Equation 1 is satisfied: ${I}_{background} \leq {I}_{min}$ Equation 1
wherein Iₘᵢₙ is a height of the lowest peak among Li₂S peaks corresponding to positions at diffraction angles (2θ) of 27° ± 1.0°, 31° ± 1.0°, 45° ± 1.0°, and 53° ± 1.0° in the graph of XRD analysis, and I_{background} is a height of the highest peak in a diffraction angle (2θ) range of 20° to 25° in the graph of XRD analysis.
